(19) Europäisches Patentamt
European Patent Office
Office européen des brevets

(11) **EP 4 790 802 A1**

(12) **EUROPEAN PATENT APPLICATION**
published in accordance with Art. 153(4) EPC

(43) Date of publication:
**12.08.2026 Bulletin 2026/33**

(21) Application number: **24874371.8**

(22) Date of filing: **21.08.2024**

(51) International Patent Classification (IPC):
***H01M 50/105*** *(2021.01)* ***H01M 50/119*** *(2021.01)*
***H01M 50/121*** *(2021.01)* ***H01M 50/129*** *(2021.01)*
***H01M 50/131*** *(2021.01)*

(52) Cooperative Patent Classification (CPC):
**H01M 50/105; H01M 50/119; H01M 50/121; H01M 50/129; H01M 50/131;** Y02E 60/10

(86) International application number:
**PCT/JP2024/029680**

(87) International publication number:
**WO 2025/074757 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.10.2023 JP 2023173471**

(71) Applicant: **Toppan Holdings Inc.**
**Tokyo 110-0016 (JP)**

(72) Inventor: **IMAMOTO Junya**
**Tokyo 110-0016 (JP)**

(74) Representative: **Hoffmann Eitle**
**Patent- und Rechtsanwälte PartmbB**
**Arabellastraße 30**
**81925 München (DE)**

# (54) POWER STORAGE DEVICE EXTERIOR MATERIAL AND POWER STORAGE DEVICE

(57) A power storage device packaging material includes a substrate layer, a barrier layer, a bonding layer, and a sealant layer in this order. In the power storage device packaging material, the bonding layer is a thermal adhesive resin layer or an adhesive layer, and when the bonding layer is the thermal adhesive resin layer, a laminate of the thermal adhesive resin layer and the sealant layer has a hydrogen sulfide permeability coefficient of $1.1\times10^{-9}$ cc·mm/cm$^2$·sec·cmHg or greater and less than $1.0\times10^{-8}$ cc.mm/cm$^2$.sec.cmHg, and when the bonding layer is the adhesive layer, the sealant layer has a hydrogen sulfide permeability coefficient of $1.1\times10^{-9}$ cc·mm/cm$^2$·sec·cmHg or greater and less than $1.0\times10^{-8}$ cc·mm/cm2·sec·cmHg.

FIG.1

10
11
12a
14a
13
14b
15
17
16

EP 4 790 802 A1

## Description

[Technical Field]

The present disclosure relates to power storage device packaging materials and power storage devices.

[Background Art]

In power storage devices such as solid-state batteries, power storage elements are housed in a packaging bag formed using a packaging material.

As an example of such a packaging material, PTL 1 below discloses a solid-state battery packaging material for use in a solid-state battery containing a sulfide solid electrolyte material, the solid-state battery packaging material being formed of a laminate including a substrate layer, a barrier layer, a barrier protective film formed on the surface of the barrier layer, and a thermally fusible resin layer in this order, wherein a resin constituting the thermally fusible resin layer has a hydrogen sulfide permeability coefficient of $1.0 \times 10^{-8}$ cc·mm/cm$^2$·sec·cmHg or greater.

Further, PTL 2 below discloses a solid-state battery packaging material for use in a solid-state battery containing a sulfide solid electrolyte material, the solid-state battery packaging material being formed of a laminate including a substrate layer, a barrier layer, and a thermally fusible resin layer in this order, wherein a resin constituting the thermally fusible resin layer has a hydrogen sulfide permeability coefficient of $1.0 \times 10^{-9}$ cc·mm/cm$^2$·sec·cmHg or less.

[Citation List]

[Patent Literature]

PTL 1: WO 2020/153456

PTL 2: WO 2020/153458

[Summary of Invention]

[Technical Problem]

The power storage device packaging material may be stretched and contracted as the power storage element expands and contracts during operation of the power storage device.

However, both the solid-state battery packaging materials disclosed in PTLs 1 and 2 have room for improvement at least in terms of suppressing deterioration in insulating properties due to stretching.

The present disclosure has been made in view of the above circumstances, and aims to provide a power storage device packaging material and a power storage device that can suppress deterioration in insulating properties due to stretching.

[Solution to Problem]

An aspect of the present disclosure provides a power storage device packaging material including: a substrate layer; a barrier layer; a bonding layer; and a sealant layer in this order, the bonding layer being a thermal adhesive resin layer or an adhesive layer, wherein when the bonding layer is the thermal adhesive resin layer, a laminate of the thermal adhesive resin layer and the sealant layer has a hydrogen sulfide permeability coefficient of $1.1 \times 10^{-9}$ cc·mm/cm$^2$·sec·cmHg or greater and less than $1.0 \times 10^{-8}$ cc·mm/cm$^2$·sec·cmHg, and when the bonding layer is the adhesive layer, the sealant layer has a hydrogen sulfide permeability coefficient of $1.1 \times 10^{-9}$ cc·mm/cm$^2$·sec·cmHg or greater and less than $1.0 \times 10^{-8}$ cc·mm/cm$^2$·sec·cmHg.

The power storage device packaging material can suppress deterioration in insulating properties due to stretching.

The inventors of the present disclosure consider the reasons for the above effects to be as follows.

First, when the bonding layer is a thermal adhesive resin, if a laminate of the thermal adhesive resin layer and the sealant layer has a hydrogen sulfide permeability coefficient of less than the lower limit value, $1.1 \times 10^{-9}$ cc·mm/cm$^2$·sec·cmHg, the laminate hardens overall and becomes brittle, making it prone to cracks (microcracks) when the packaging material is stretched. On the other hand, if the hydrogen sulfide permeability coefficient is greater than or

equal to the upper limit, $1.0\times10^{-8}$ cc·mm/cm$^2$·sec·cmHg, the laminate becomes soft overall, but when the packaging material is stretched, stress is concentrated on a hard part or the like of the laminate, making it prone to cracking.

In contrast, when the hydrogen sulfide permeability coefficient of the laminate is within the above range as in the present disclosure, the laminate is neither too hard nor too soft, and even when stress is applied to the laminate due to stretching of the packaging material, the stress is relieved throughout the laminate as a whole, thereby suppressing occurrence of cracking in the laminate. As a result, even when the packaging material is stretched, deterioration in insulating properties of the packaging material is suppressed.

The inventors of the present disclosure presume that, when the bonding layer is an adhesive layer, for the same reason as described above, deterioration in insulating properties of the packaging material is suppressed even when the packaging material is stretched.

In the above power storage device packaging material, it is preferred that the sealant layer contains a polypropylene-based resin that contains at least one of homo polypropylene and block polypropylene, and a polyethylene-based resin, and the polyethylene-based resin has at least one melting peak in a range of 60°C or higher and 105°C or less.

In this case, the dispersibility of the polyethylene-based resin into the polypropylene-based resin in the sealant layer is improved, resulting in more efficient stress relaxation properties, thereby effectively suppressing deterioration in insulating properties of the power storage device packaging material due to stretching.

In the above power storage device packaging material, it is preferred that the polyethylene-based resin has a ratio (Mw/Mn) of a weight average molecular weight Mw to a number average molecular weight Mn of 1.2 or greater and 5.0 or less.

In this case, the dispersibility of the polyethylene-based resin into the polypropylene-based resin in the sealant layer is further improved, resulting in more efficient stress relaxation properties, thereby further effectively suppressing deterioration in insulating properties of the power storage device packaging material due to stretching.

In the above power storage device packaging material, it is preferred that the sealant layer contains a polypropylene-based resin that contains at least one of homo polypropylene and block polypropylene, and a content of the polypropylene-based resin in the sealant layer is 50 mass% to 95 mass%.

In this case, the polypropylene-based resin has sealant suitability and can impart an appropriate hardness to the sealant layer. Also, the hardness and softness of the sealant layer can be balanced. This more effectively suppresses deterioration in insulating properties of the power storage device packaging material due to stretching.

In the above power storage device packaging material, it is preferred that when the bonding layer is a thermal adhesive resin layer, the thermal adhesive resin layer contains a polypropylene-based resin, and a content of the polypropylene-based resin in the thermal adhesive resin layer is 50 mass% to 95 mass%.

In this case, the hardness and softness of the thermal adhesive resin layer can be balanced. This more effectively suppresses deterioration in insulating properties of the power storage device packaging material due to stretching.

In the above power storage device packaging material, it is preferred that the sealant layer contains a polypropylene-based resin that contains homo polypropylene, and a polyethylene-based resin, and the polyethylene-based resin has a ratio (Mw/Mn) of a weight average molecular weight Mw to a number average molecular weight Mn of 1.2 or greater and 5.0 or less.

In this case, the dispersibility of the polyethylene-based resin into the polypropylene-based resin in the sealant layer is improved, resulting in efficient stress relaxation properties, thereby effectively suppressing deterioration in insulating properties of the power storage device packaging material due to stretching.

In the above power storage device packaging material, it is preferred that when the bonding layer is the thermal adhesive resin layer, a laminate of the thermal adhesive resin layer and the sealant layer has a total thickness of 25 μm to 150 μm, and when the bonding layer is the adhesive layer, the sealant layer has a thickness of 25 μm to 150 μm.

In this case, since the thermal adhesive resin layer and the sealant layer, or the sealant layer, have sufficient sealing properties and water vapor barrier properties, when the packaging bag formed using the power storage device packaging material accommodates the power storage element, it can readily prevent permeation of gases such as water vapor from the exterior of the packaging bag, thereby facilitating the suppression of deterioration of the power storage element.

The above power storage device is preferably a solid-state battery. In this case, even when the solid-state battery expands and contracts, deterioration in insulating properties of the power storage device packaging material is suppressed.

Another aspect of the present disclosure provides a power storage device including: a power storage element; and a packaging bag that accommodates the power storage element, wherein the packaging bag is formed using the above power storage device packaging material.

According to the above power storage device, even if the power storage device packaging material is stretched due to the power storage element expanding and contracting during operation of the power storage device, deterioration in insulating properties of the packaging bag formed using the power storage device packaging material is suppressed,

resulting in longer service life of the power storage device.

The above power storage device is preferably a solid-state battery. In this case, the power storage element is particularly likely to expand and contract, but even when the power storage element expands and contracts, deterioration in insulating properties of the power storage device packaging material due to stretching is suppressed, and thus deterioration in insulating properties of the packaging bag is suppressed, resulting in longer service life of the power storage device.

[Advantageous Effects of Invention]

The present disclosure provides a power storage device packaging material and a power storage device that can suppress deterioration in insulating properties due to stretching.

[Brief Description of Drawings]

Fig. 1 is a schematic cross-sectional view of an embodiment of a power storage device packaging material of the present disclosure.

Fig. 2 is a schematic cross-sectional view of another embodiment of a power storage device packaging material of the present disclosure.

Fig. 3 is a front view of a device for measuring a hydrogen sulfide permeation amount.

Fig. 4 is a perspective view of an embodiment of a power storage device according to the present disclosure.

[Description of Embodiments]

Preferred embodiments of the present disclosure will be described in detail below with reference to the drawings as appropriate. Throughout the drawings, the same or corresponding components are denoted by the same reference signs, and repeated description is omitted. Also, dimensional ratios in the drawings are not limited to the ratios shown in the drawings.

[Power Storage Device Packaging Material]

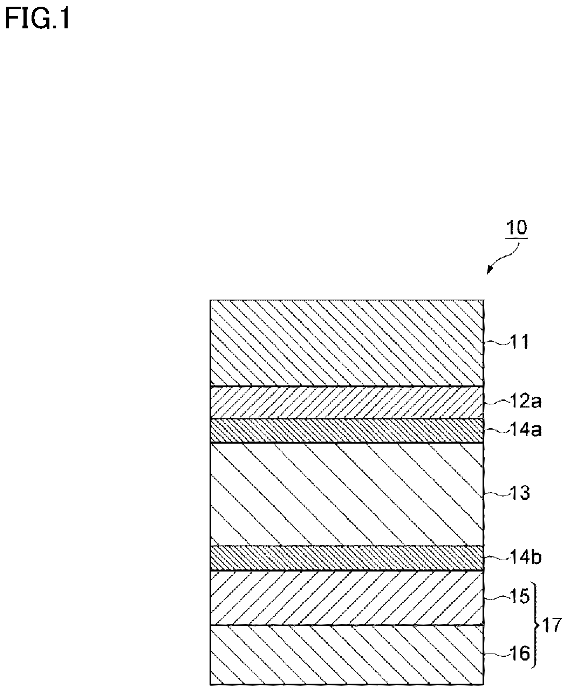

Fig. 1 is a schematic cross-sectional view of a power storage device packaging material according to an embodiment of the present disclosure. As shown in Fig. 1, a power storage device packaging material of the present embodiment (hereinafter, also simply referred to as a "packaging material") 10 is a packaging material for a power storage device, and includes a substrate layer 11, a barrier layer 13, a thermal adhesive resin layer 15 as a bonding layer, and a sealant layer 16 in this order.

Further, as shown in Fig. 1, the packaging material 10 may include a first adhesive layer 12a between the substrate layer 11 and the barrier layer 13.

The packaging material 10 can suppress deterioration in insulating properties due to stretching.

The barrier layer 13 may have a first anticorrosion treatment layer 14a on the substrate layer 11 side, and may have a second anticorrosion treatment layer 14b on the sealant layer 16 side.

Further, when the packaging material 10 is used as a packaging bag for a power storage device, the substrate layer 11 is the outermost layer and the sealant layer 16 is the innermost layer of the packaging material 10. In other words, the packaging material 10 is used with the substrate layer 11 being on the outside of the power storage device and the sealant layer 16 being on the inside of the power storage device.

In the following description, each of the layers constituting the packaging material 10 will be specifically described.

<Substrate Layer>

The substrate layer 11 imparts heat resistance to the packaging material 10 in the step of sealing the packaging material 10 during production of a power storage device, and prevents pinholes from occurring during forming processing or distribution of the packaging material 10. Particularly in the case of a packaging material for large power storage devices, the substrate layer 11 can also impart scratch resistance, chemical resistance, insulating properties, and the like to the

packaging material 10.

The substrate layer 11 is preferably composed of a resin having insulating properties. Examples of the resin include polyester resins, polyamide resins, polyimide resins, polyamideimide resins, polyether ketone resins, polyphenylene sulfide resins, polyetherimide resins, polysulfone resins, fluororesins, phenol resins, melamine resins, urethane resins, allyl resins, silicon resins, epoxy resins, furan resins and acetyl cellulose resins.

Of the above resins, a polyester resin and a polyamide resin have good formability and thus are preferable for the substrate layer 11. Examples of the polyester resins include polyethylene terephthalate, polybutylene terephthalate and polyethylene naphthalate. Examples of the polyamide resins include nylon 6, nylon 6,6, a copolymer of nylon 6 and nylon 6,6, nylon 9T, nylon 10, polymetaxylylene adipamide (MXD6), nylon 11 and nylon 12.

The substrate layer 11 may be in the form of a stretched film or an unstretched film or in the form of a coating film. Further, the substrate layer 11 may be formed of a single layer or a multilayer. When the substrate layer 11 is a multilayer, it is formed by laminating layers made of different resins. When the substrate layer 11 is in the form of a film, a coextruded laminate or a laminate obtained by lamination via an adhesive can be used as the substrate layer 11. When the substrate layer 11 is in the form of a coating film, a coating film obtained by applying a coating film-forming composition multiple times can be used as the substrate layer 11. The substrate layer 11 may also be a multilayer, which can be formed by combining a film and a coating film.

When the above-mentioned resins are used in the form of a film, the substrate layer 11 is preferably a biaxially stretched film. In this case, the packaging material 10 has good formability. Examples of stretching methods used to obtain a biaxially stretched film include sequential biaxial stretching, tubular biaxial stretching, simultaneous biaxial stretching, and the like. The biaxially stretched film is preferably obtained by tubular biaxial stretching, from the viewpoint of achieving better deep drawing formability of the packaging material 10.

The substrate layer 11 preferably has a thickness of 6 μm to 100 μm, more preferably 10 μm to 75 μm, and even more preferably 10 μm to 50 μm. The thickness of the substrate layer 11 of 6 μm or greater tends to improve pinhole resistance and insulating properties of the packaging material 10. The thickness of the substrate layer 11 of 100 μm or less can reduce the total thickness of the packaging material 10.

Preferably, the substrate layer 11 has a melting point higher than that of the sealant layer 16. When the substrate layer 11 or the sealant layer 16 has a multilayer structure, the melting point of the substrate layer 11 or the sealant layer 16 means the melting point of the layer having the highest melting point among the layers constituting the substrate layer 11 or the sealant layer 16. The substrate layer 11 having a melting point higher than the melting point of the sealant layer 16 can prevent the appearance of the packaging material 10 from being deteriorated due to melting of the substrate layer 11 (outer layer) during heat-sealing of the packaging material 10. Further, when there are a plurality of melting peak temperatures in each of the layers constituting the substrate layer 11 or the sealant layer 16, the melting point of each layer refers to the melting peak temperature at which the heat of fusion is largest. The melting peak temperature refers to the temperature at the maximum point of the melting peak.

A difference between a melting point $T_{11}$ of the substrate layer 11 and a melting point $T_{16}$ of the sealant layer 16 ($T_{11}$-$T_{16}$) is preferably 20°C or more. The temperature difference of 20°C or more can further sufficiently suppress the deterioration in appearance of the packaging material 10 caused by heat-sealing of the packaging material 10.

The melting temperature of the substrate layer 11 is preferably 240°C or higher. However, the melting temperature of the substrate layer 11 is preferably 350°C or lower. Examples of the resin film that can be used as the substrate layer 11 and has a melting temperature within the above range include nylon films, polyester films such as PET films, polyamide films, polyphenylene sulfide films (PPS films), and the like.

The substrate layer 11 may be a commercially available film, or may be a coating film (obtained by applying and drying a coating liquid). The substrate layer 11 may be formed by applying a thermosetting resin. Further, the substrate layer 11 may contain various additives (e.g., flame retardants, slip agents, anti-blocking agents, antioxidants, photostabilizers and tackifiers).

<First Adhesive Layer>

The first adhesive layer 12a bonds the substrate layer 11 to the barrier layer 13. Specific examples of the materials used for constituting the first adhesive layer 12a include a polyurethane resin prepared by reacting a main resin such as a polyester polyol, polyether polyol, acrylic polyol or carbonate polyol with a bifunctional or higher functional isocyanate compound (polyfunctional isocyanate compound) as a curing agent. The various polyols can be used singly or in combination of two or more, according to the function and performance required for the packaging material 10. Further, in addition to the above, the first adhesive layer 12a can also be made of an epoxy resin as a main resin with a curing agent.

The first adhesive layer 12a is formed using the adhesive composition containing the above-mentioned base resin and curing agent. Moreover, depending on the performance required for the adhesive, the first adhesive layer 12a may be formed by adding other various additives or stabilizers to the above adhesive composition.

The adhesive composition preferably contains, as the curing agent, at least one polyfunctional isocyanate

compound selected from the group consisting of an alicyclic isocyanate polymer and an isocyanate polymer containing an aromatic ring in the molecular structure. Examples of the polyfunctional isocyanate compound include an isocyanurate of isophorone diisocyanate, an adduct of tolylene diisocyanate, an adduct of hexamethylene diisocyanate, a biuret and an isocyanurate of hexamethylene diisocyanate, a biuret and an isocyanurate of tolylene diisocyanate, an adduct, a biuret and an isocyanurate of diphenylmethane diisocyanate, and an adduct, a biuret and an isocyanurate of xylylene diisocyanate.

As the curing agent, an alicyclic isocyanate polymer and an isocyanate polymer containing an aromatic ring in the molecular structure may be used in combination. The combined use of these tends to further improve heat resistance of the packaging material 10.

The adhesive composition preferably contains at least one polyol selected from the group consisting of polyester polyols, acrylic polyols and polycarbonate diols from the perspective of further improving heat resistance of the packaging material 10. Among these adhesive compositions, polyester polyols are preferably contained in the adhesive composition from the viewpoint of further improving the heat resistance of the packaging material 10.

In the adhesive composition, a ratio (NCO/OH) of the number of isocyanate groups contained in the polyfunctional isocyanate compound to the number of hydroxyl groups contained in the polyol may be 1.5 to 40.0, and preferably 15.0 to 30.0. The ratio of 1.5 or greater causes the curing agents to react with each other, whereby by-products such as urea resin and biuret resin are more likely to form. These by-products contain active hydrogen groups, which interact with polar groups in adjacent layers, further improving the interfacial adhesion between the first adhesive layer 12a and the substrate layer 11 and between the first adhesive layer 12a and the barrier layer 13. Therefore, the packaging material 10 tends to have improved heat resistance. On the other hand, the ratio of 40.0 or less can further improve lamination strength of the packaging material 10 in a room temperature environment and a high temperature environment.

The adhesive composition may further contain a tin-based, titanium-based, or zirconium-based urethanization catalyst to accelerate curing. The adhesive composition may further contain an overt or latent curing agent. Examples of the overt or latent curing agent include amine-based compounds. The above-mentioned urethanization catalysts and overt or latent curing agents may be used alone or in combination of two or more types.

The thickness of the first adhesive layer 12a is not specifically limited, but is preferably 1 μm to 10 μm, and more preferably 2 μm to 7 μm from the perspective of obtaining desired adhesive strength, conformability, processability, and the like for the packaging material 10.

The mass per unit area of the first adhesive layer 12a may be 2.0 g/m$^2$ to 6.0 g/m$^2$, preferably 2.5 g/m$^2$ to 5.0 g/m$^2$, and more preferably 3.0 g/m$^2$ to 4.0 g/m$^2$ from the perspective of ensuring further improved lamination strength for the packaging material 10 both in a room temperature environment and a high temperature environment, and obtaining further improved deep drawing formability.

<Barrier Layer>

The barrier layer 13 has water vapor barrier properties to prevent moisture from infiltrating into the power storage device. Further, the barrier layer 13 may have ductility and malleability for deep drawing.

The barrier layer 13 can be made of, for example, various metal foils such as aluminum, stainless steel and copper, or a metal vapor deposition film, an inorganic oxide vapor deposition film, a carbon-containing inorganic oxide vapor deposition film, or a film having these vapor deposition films.

Examples of the film having a vapor deposition film include an aluminum vapor deposition film and an inorganic oxide vapor deposition film. These can be used singly or in combination of two or more.

The barrier layer 13 is preferably made of a metal foil, and more preferably made of an aluminum foil or a stainless steel from the viewpoint of the weight (specific gravity), barrier properties such as moisture resistance, processability and cost.

Further, the aluminum foil may be preferably an annealed soft aluminum foil from the perspective of imparting desired ductility and malleability to the barrier layer 13 during forming. It is more preferred to use an aluminum foil containing iron for the purposes of imparting further pinhole resistance and ductility and malleability during forming.

The iron content in the aluminum foil is preferably 0.1 mass% to 9.0 mass%, and more preferably 0.5 mass% to 2.0 mass% relative to the 100 mass% of the aluminum foil. An iron content of 0.1 mass% or greater can further improve pinhole resistance, ductility and malleability of a packaging material 10. An iron content of 9.0 mass% or less can improve flexibility of a packaging material 10.

Although an untreated aluminum foil may also be used as the aluminum foil, an aluminum foil subjected to a degreasing treatment is preferably used from the perspective of imparting corrosion resistance.

When degreasing the aluminum foil, only one surface of the aluminum foil may be degreased, or both surfaces may be degreased.

The thickness of the barrier layer 13 is not specifically limited, but is preferably 9 μm to 200 μm, and more preferably 15 μm to 100 μm, from the viewpoint of barrier properties, pinhole resistance and processability of the barrier

layer 13.

<First and Second Anticorrosion Treatment Layers>

The first and second anticorrosion treatment layers 14a and 14b are provided to prevent corrosion of the metal foil (metal foil layer) or the like constituting the barrier layer 13. The first anticorrosion treatment layer 14a enhances adhesion between the barrier layer 13 and the first adhesive layer 12a. Further, the second anticorrosion treatment layer 14b enhances adhesion between the barrier layer 13 and the thermal adhesive resin layer 15.

The first anticorrosion treatment layer 14a and the second anticorrosion treatment layer 14b may have the same configuration or different configurations.

The first and second anticorrosion treatment layers 14a and 14b (hereinafter, also simply referred to as "anticorrosion treatment layers 14a and 14b") may be formed by, for example, degreasing treatment, hydrothermal modification treatment, anodic oxidation treatment, chemical conversion treatment, or a combination of these treatments.

Examples of the degreasing treatment include acid degreasing treatment and alkaline degreasing treatment.

The acid degreasing treatment may be performed using an inorganic acid such as sulfuric acid, nitric acid, hydrochloric acid, or hydrofluoric acid alone or using a mixture of these inorganic acids. Further, the acid degreasing is preferably performed using an acid degreasing agent obtained by dissolving a fluorine-containing compound, such as monosodium ammonium difluoride, in the above inorganic acid. In this case, particularly when an aluminum foil is used as the barrier layer 13, the effect of degreasing aluminum is obtained. Further, the acid degreasing agent can form a fluoride of aluminum in a passive state, which is advantageous in terms of corrosion resistance.

The alkaline degreasing may be a method using sodium hydroxide or the like.

Examples of the hydrothermal modification treatment include a boehmite treatment in which an aluminum foil is immersed in boiling water to which triethanolamine has been added.

Examples of the anodic oxidation treatment include an alumite treatment.

Examples of the chemical conversion treatment include an immersion-type chemical conversion treatment and a coating-type chemical conversion treatment.

The immersion-type chemical conversion treatment may be, for example, chromate treatment, zirconium treatment, titanium treatment, vanadium treatment, molybdenum treatment, calcium phosphate treatment, strontium hydroxide treatment, cerium treatment, ruthenium treatment, or various chemical conversion treatments of mixed phases thereof.

On the other hand, the coating-type chemical conversion treatment may be a method of applying a coating agent having an anticorrosion performance to the barrier layer 13.

Of these anticorrosion treatments, when any of the hydrothermal modification treatment, anodic oxidation treatment and chemical conversion treatment is used to form at least part of the anticorrosion treatment layer, the degreasing treatment described above is preferably performed in advance. Further, when a degreased metal foil such as an annealed metal foil is used as the barrier layer 13, it is not necessary to perform degreasing treatment again in forming the anticorrosion treatment layers 14a and 14b.

The coating agent used for the coating-type chemical conversion treatment preferably contains trivalent chromium. Further, the coating agent may contain at least one polymer selected from the group consisting of a cationic polymer and an anionic polymer.

Of the treatments mentioned above, the hydrothermal modification treatment and the anodic oxidation treatment, in particular, dissolve the surface of an aluminum foil with a treatment agent and form an aluminum compound having good corrosion resistance (such as boehmite or alumite). Therefore, since a co-continuous structure is formed from the barrier layer 13 made of an aluminum foil to the anticorrosion treatment layers 14a and 14b, the above treatments are included in the definition of the chemical conversion treatment.

As will be described later, the anticorrosion treatment layers 14a and 14b can be formed only by a pure coating method that is not included in the definition of chemical conversion treatment. In such a coating method, for example, a sol of rare-earth element oxide such as cerium oxide with an average particle size of 100 nm or less may be used as a material that has an anticorrosion effect (inhibitor effect) for aluminum and is preferable in terms of environmental aspects. Use of this method makes it possible to impart an anticorrosion effect to a metal foil such as an aluminum foil even when using an ordinary coating method.

Examples of the rare-earth element oxide sol include sols containing various solvents, such as an aqueous solvent, an alcoholic solvent, a hydrocarbon solvent, a ketone solvent, an ester solvent, an ether solvent, and the like. Among these, an aqueous solvent sol (sol using an aqueous solvent) is preferred.

To stabilize dispersion, the rare-earth oxide sol may contain, as a dispersion stabilizer, an inorganic acid such as nitric acid, hydrochloric acid, phosphoric acid, or the like or a salt thereof, or an organic acid such as acetic acid, malic acid, ascorbic acid, lactic acid, or the like. Of these dispersion stabilizers, phosphoric acid in particular is expected to achieve the following effects (1) to (4) in the packaging material 10.

(1) Stabilizing dispersion of sol

(2) Improving adhesion between the barrier layer 13 and the anticorrosion treatment layers 14a and 14b by using the aluminum chelating ability of phosphoric acid

(3) Imparting corrosion resistance by capturing aluminum ions (passivation)

(4) Improving cohesive force of the anticorrosion treatment layers (oxide layers) 14a and 14b by readily inducing dehydration condensation of phosphoric acid even at low temperature

Since the anticorrosion treatment layers 14a and 14b formed of the rare-earth oxide sol are aggregates of inorganic particles, the cohesive force of these layers may be lowered even after being dry-cured. Therefore, the anticorrosion treatment layers 14a and 14b in this case are preferably compounded with an anionic polymer or a cationic polymer in order to supplement the cohesive force.

The anticorrosion treatment layers 14a and 14b are not limited to the layers described above. For example, the anticorrosion treatment layers 14a and 14b may be formed using a treating agent prepared by blending phosphoric acid and a chromium compound with a resin binder (such as aminophenol) as in a coating-type chromate based on known art. When this treatment agent is used, the anticorrosion treatment layers 14a and 14b will have both the anticorrosion function and adhesion. Further, although it is necessary to consider stability of a coating solution, a one-liquid type coating agent prepared in advance by mixing a rare-earth oxide sol with a polycationic polymer or a polyanionic polymer can be used to form the anticorrosion treatment layers 14a and 14b having both the anticorrosion function and adhesion.

Regardless of having a multilayer structure or a monolayer structure, the anticorrosion treatment layers 14a and 14b preferably have mass per unit area of 0.005 g/m$^2$ to 0.200 g/m$^2$, and more preferably 0.010 g/m$^2$ to 0.100 g/m$^2$. When the mass per unit area is 0.005 g/m$^2$ or greater, the anticorrosion function can be readily imparted to the barrier layer 13. Even if the mass per unit area exceeds 0.200 g/m$^2$, there is little change in the anticorrosion function. On the other hand, if a rare-earth oxide sol is used and the coating film is thick, heat-curing during drying may be insufficient, decreasing the cohesive force. The thickness of the anticorrosion treatment layers 14a and 14b can be calculated from their specific gravity.

From the perspective of enhancing adhesion between the sealant layer 16 and the barrier layer 13, the anticorrosion treatment layers 14a and 14b may contain, for example, cerium oxide, 1 to 100 parts by mass of phosphoric acid or phosphate relative to 100 parts by mass of the cerium oxide, and a cationic polymer, or may be formed by applying a chemical conversion treatment to the barrier layer 13, or may contain a cationic polymer and be formed by applying a chemical conversion treatment to the barrier layer 13.

<Thermal Adhesive Resin Layer>

The thermal adhesive resin layer 15 is a layer that bonds the sealant layer 16 to the barrier layer 13, and contains an adhesive resin.

The thermal adhesive resin is not specifically limited as long as it is a resin having thermal adhesive properties, and may include a polyolefin resin, but preferably includes an acid-modified polyolefin resin. In this case, the thermal adhesive resin layer 15 has sufficient adhesion to both the sealant layer 16 and the barrier layer 13.

The acid-modified polyolefin resin may be a polyolefin resin modified with at least one selected from the group consisting of maleic anhydride, carboxylic acid, sulfonic acid, and derivatives thereof. The acid-modified polyolefin resin may be, for example, a graft copolymer, a block copolymer or a random copolymer. From the viewpoint of adhesion between the thermal adhesive resin layer 15 and the barrier layer 13, the acid-modified polyolefin resin is preferably a polyolefin resin graft-modified with maleic anhydride.

Examples of the polyolefin resin include a polypropylene-based resin, a polyethylene-based resin, a polybutene-based resin, a polypentene-based resin, a polyoctene-based resin and a polymethylpentene-based resin.

The polypropylene-based resin is a resin obtained from a polymerized monomer containing propylene, and serves to impart hardness to the thermal adhesive resin layer 15. Examples of the polypropylene-based resin include homo polypropylene (homo PP), block polypropylene (block PP) and random polypropylene. These may be used singly or in combination of two or more. The polypropylene-based resin preferably includes at least one of homo polypropylene and block polypropylene since it can impart an appropriate hardness to the thermal adhesive resin layer 15.

The resin contained in the thermal adhesive resin layer 15 may further include, in addition to the acid-modified polyolefin resin, an unmodified polyolefin resin, such as a polyethylene-based resin, a polypropylene-based resin, a polybutene-based resin, a polypentene-based resin, a polyoctene-based resin and a polymethylpentene-based resin.

Examples of the polyethylene-based resin include low-density polyethylene (LDPE), linear low-density polyethylene (LLDPE), medium-density polyethylene (MDPE), high-density polyethylene (HDPE) and polyethylene-based

elastomers. These may be used singly or in combination of two or more. The polyethylene-based resin preferably includes a polyethylene-based elastomer since it can impart softness to the thermal adhesive resin layer 15 in particular.

The polyethylene-based elastomer may be an elastomer having an $\alpha$-olefin as a comonomer. Specific examples of the polyethylene-based elastomer include compounds obtained by copolymerizing ethylene with an $\alpha$-olefin composed of at least one selected from 1-butene, 1-pentene, 1-hexene, 1-octene and 4-methyl-1-pentene.

The content of the polypropylene-based resin in the thermal adhesive resin layer 15 is not specifically limited, and may be, for example, 30 mass% to 100 mass%, but from the viewpoint of the balance between hardness and softness of the thermal adhesive resin layer 15, it is preferably 50 mass% to 95 mass%, and more preferably 70 mass% to 90 mass%.

The content of the polyethylene-based resin in the thermal adhesive resin layer 15 is not specifically limited, and may be, for example, 2 mass% to 70 mass%, but from the viewpoint of the balance between hardness and softness of the thermal adhesive resin layer 15, it is preferably 5 mass% to 50 mass%, and more preferably 10 mass% to 30 mass%.

When the thermal adhesive resin layer 15 contains a polypropylene-based resin and a polyethylene-based resin, one or both of the polypropylene-based resin and the polyethylene-based resin may be the same or different from a polypropylene-based resin (A) and a polyethylene-based resin (B) contained in the sealant layer 16.

The thermal adhesive resin layer 15 may contain, if necessary, various miscible and immiscible elastomers, various additives such as flame retardants, slip agents, anti-blocking agents, antioxidants, photostabilizers, crystal nucleating agents and tackifiers.

<Sealant Layer>

The sealant layer 16 imparts sealing properties to the packaging material 10 due to heat-sealing, and is located on the inside of the power storage device and heat-sealed when the power storage device is assembled.

The sealant layer 16 is a layer containing a resin having heat-sealing properties. The resin having heat-sealing properties preferably contains a polypropylene-based resin (A). The sealant layer 16 may or may not further contain a polyethylene-based resin (B), but from the viewpoint of controlling the stress relaxation properties of the sealant layer 16 and facilitating control of the hydrogen sulfide permeation amount, it is preferred that the sealant layer 16 further contains a polyethylene-based resin (B).

The polypropylene-based resin is a resin obtained from a polymerized monomer containing propylene, and serves to impart hardness to the sealant layer 16. Examples of the polypropylene-based resin include homo polypropylene (homo PP), block polypropylene (block PP) and random polypropylene. These may be used singly or in combination of two or more. The polypropylene-based resin preferably includes at least one of homo polypropylene and block polypropylene since it has sealant suitability and can impart an appropriate hardness to the sealant layer 16.

The polyethylene-based resin (B) is a resin obtained from a polymerized monomer containing ethylene, and serves to impart softness (stress relaxation properties) to the sealant layer 16. Examples of the polyethylene-based resin include low-density polyethylene (LDPE), linear low-density polyethylene (LLDPE), medium-density polyethylene (MDPE), high-density polyethylene (HDPE) and polyethylene-based elastomers. These may be used singly or in combination of two or more. The polyethylene-based resin preferably includes a polyethylene-based elastomer since it can impart softness to the sealant layer 16 in particular.

The polyethylene-based elastomer may be an elastomer having an $\alpha$-olefin as a comonomer. Specific examples of the polyethylene-based elastomer include ethylene-$\alpha$-olefin copolymers obtained by copolymerizing ethylene with an $\alpha$-olefin composed of at least one selected from 1-butene, 1-pentene, 1-hexene, 1-octene and 4-methyl-1-pentene.

The sealant layer 16 contains a polypropylene-based resin (A) that contains at least one of homo polypropylene and block polypropylene, and a polyethylene-based resin (B), and it is preferred that the polyethylene-based resin (B) has at least one melting peak in the range of 60°C or higher and 105°C or less.

In this case, the dispersibility of the polyethylene-based resin into the polypropylene-based resin in the sealant layer 16 is improved, resulting in more efficient stress relaxation properties, thereby effectively suppressing deterioration in insulating properties of the packaging material 10 due to stretching.

The range of the temperature of melting peak (hereinafter, referred to as "melting peak temperature") is preferably 70°C or higher and 100°C or less, more preferably 75°C or higher and 95°C or less, and even more preferably 82°C or higher and 95°C or less.

When the sealant layer 16 contains a polyethylene-based resin having a melting peak in the above melting peak temperature range, dispersibility of the polyethylene-based resin contained in the sealant layer 16 is improved, resulting in more efficient stress relaxation properties, thereby effectively suppressing deterioration in insulating properties of the packaging material 10 due to stretching.

The melting peak temperature herein is measured in accordance with JIS K 7121-1987 using a differential scanning calorimeter (DSC).

The ratio (hereinafter, also referred to as "Mw/Mn") of the weight average molecular weight Mw to the number average molecular weight Mn of the above polyethylene-based resin contained as the polyethylene-based resin (B) in the

sealant layer 16 is not specifically limited, but is preferably 1.2 or greater and 5.0 or less.

When the Mw/Mn of the polyethylene-based resin is within the above range, the dispersibility of the polyethylene-based resin into the polypropylene-based resin in the sealant layer 16 is further improved, resulting in more efficient stress relaxation properties, thereby further effectively suppressing deterioration in insulating properties of the power storage device packaging material due to stretching.

The number average molecular weight Mn and the weight average molecular weight Mw herein refer to the number average molecular weight Mn and the weight average molecular weight Mw determined in accordance with JIS K 7252-1 and 4:2016 using gel permeation chromatography (GPC) at measurement temperature of 145°C and expressed relative to a polystyrene standard.

The Mw/Mn is preferably 1.5 or greater and 4.5 or less, and more preferably 2.0 or greater and 4.0 or less.

The content of the polypropylene-based resin in the sealant layer 16 is not specifically limited, and may be, for example, 30 mass% to 100 mass%, but from the viewpoint of the balance between hardness and softness of the sealant layer 16, it is preferably 50 mass% to 95 mass%, and more preferably 70 mass% to 90 mass%.

The content of the polyethylene-based resin in the sealant layer 16 is not specifically limited, and may be, for example, 2 mass% to 70 mass%, but from the viewpoint of the balance between hardness and softness of the sealant layer 16, it is preferably 5 mass% to 50 mass%, and more preferably 10 mass% to 30 mass%.

The sealant layer 16 may contain, in addition to the polypropylene-based resin (A) and the polyethylene-based resin (B), other additive components if necessary, such as slip agents, anti-blocking agents, antioxidants, photostabilizers, crystal nucleating agents and flame retardants.

The content of these additive components is preferably 5 mass% or less when the total mass of the sealant layer 16 is 100 mass%.

From the perspective of improving the hardness of the sealing portion, the ratio of the thickness of the sealant layer 16 to the thickness of the thermal adhesive resin layer 15 (thickness of the sealant layer 16 / thickness of the thermal adhesive resin layer 15) is preferably 1 or greater, preferably 1.1 or greater, and particularly preferably 1.5 or greater.

From the perspective of improving the scratch resistance of the packaging material 10, the ratio of the thickness of the sealant layer 16 to the thickness of the thermal adhesive resin layer 15 (thickness of the sealant layer 16 / thickness of the thermal adhesive resin layer 15) is preferably 10 or less, and more preferably 3 or less.

The total thickness of the sealant layer 16 and the thermal adhesive resin layer 15 may be 15 μm to 300 μm, and from the viewpoint of sealing properties and water vapor barrier properties of the packaging material 10, it is preferably 25 μm to 150 μm, and more preferably 40 μm to 100 μm.

A packaging material including the thermal adhesive resin layer 15 and the sealant layer 16, such as the packaging material 10, may be formed by preparing resin compositions for forming each layer and laminating them by the T-die method or blown film extrusion, or by forming one layer and then extruding and laminating another layer thereon, or by preparing layers by the T-die method or blown film extrusion and then bonding the layers together via an adhesive. The adhesive that can be used may be an adhesive containing acid-modified polypropylene and curing agent (e.g., isocyanate) from the viewpoint of interface adhesion between the layer made of an adhesive and the layer to be bonded to this layer.

<Laminate of Sealant Layer and Thermal Adhesive Resin Layer>

A laminate 17 of the sealant layer 16 and the thermal adhesive resin layer 15 has a hydrogen sulfide permeability coefficient of $1.1\times10^{-9}$ cc·mm/cm$^2$·sec·cmHg or greater and less than $1.0\times10^{-8}$ cc·mm/cm$^2$·sec·cmHg.

When the hydrogen sulfide permeability coefficient of the laminate 17 is within the above range, the laminate 17 is neither too hard nor too soft, and even when stress is applied to the laminate 17 due to stretching of the packaging material 10, the stress is relieved throughout the laminate 17 as a whole, thereby suppressing occurrence of cracking in the laminate 17. As a result, even when the packaging material 10 is stretched, deterioration in insulating properties of the packaging material 10 is suppressed.

The hydrogen sulfide permeability coefficient of the laminate 17 is preferably $2.5\times10^{-9}$ cc·mm/cm$^2$·sec·cmHg or greater, and more preferably $3.5\times10^{-9}$ cc·mm/cm$^2$·sec·cmHg or greater.

The hydrogen sulfide permeability coefficient of the laminate 17 is preferably $8.5\times10^{-9}$ cc·mm/cm$^2$·sec·cmHg or less, more preferably $7.5\times10^{-9}$ cc·mm/cm$^2$·sec·cmHg or less, and even more preferably $6.5\times10^{-9}$ cc·mm/cm$^2$·sec·cmHg or less.

The hydrogen sulfide permeability coefficient of the laminate 17 herein refers to the hydrogen sulfide permeability coefficient in the thickness direction of the laminate 17.

The hydrogen sulfide permeability coefficient of the laminate 17 can be measured by a gas permeation test. A method of measuring the hydrogen sulfide permeability coefficient of the laminate 17 will be described below.

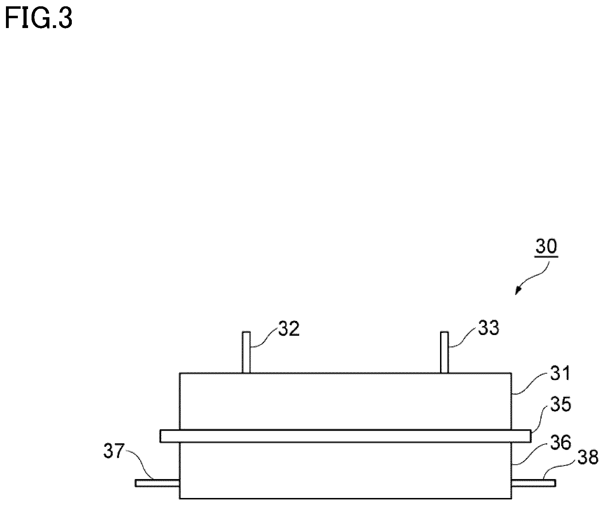

(1) First, as shown in Fig. 3, a measurement sample 35 cut out from the laminate 17 is placed so as to be sandwiched between an upper part 31 of and a lower part 36 of a separable flask.

(2) Next, in an environment of test temperature (23±5°C), nitrogen gas is introduced through a vent port 32 of the upper part 31 of the separable flask at a flow rate of 50 mL/min and exhausted through a vent port 33. Meanwhile, hydrogen sulfide gas is introduced through a vent port 37 at a flow rate of 50 mL/min and exhausted through a vent port 38. The hydrogen sulfide gas is introduced together with the nitrogen gas so that the hydrogen sulfide gas concentration in the nitrogen gas becomes 20±5 volume ppm.

(3) Next, after 24 hours have elapsed since the start of ventilation, a resin bag is connected to the vent port 33, and 0.5 L of sample gas is collected in 10 minutes.

(4) Next, the concentration of the sample gas collected in the resin bag (hydrogen sulfide gas concentration in the sample gas) is measured using a gas chromatography-flame photometric detector (GC-FPD).

(5) The above (3) and (4) are repeated 48 hours and 96 hours after the start of ventilation.

(6) From the average value (average sample gas concentration) of the concentrations of the sample gas collected after 24 hours, 48 hours and 96 hours (unit: volume ppb), a hydrogen sulfide permeation amount per hour (nL/hr) is calculated using the following calculation formula 1.

Hydrogen sulfide permeation amount (nL/hr) = average sample gas concentration (volume ppb ≒ nL/L) × amount of gas collected per hour (*) (Calculation formula 1)

(*) Since the flow rate of the nitrogen gas as the test gas is 50mL/min, the amount of gas collected per hour is 3L.

From the obtained hydrogen sulfide permeation amount, a hydrogen sulfide permeability (cc/m$^2$·day), which is the hydrogen sulfide permeation amount per unit area and per day, is calculated using the following calculation formula 2.

Hydrogen sulfide permeability (cc/m$^2$·day) = hydrogen sulfide permeation amount (nL/hr) × 24 (hr) / $10^6$ / effective test area (m$^2$) (Calculation formula 2)

The effective test area is 0.00453 m$^2$, which is the opening area of the separable flask.

(7) Finally, the unit of the hydrogen sulfide permeability is converted into cc·mm/cm$^2$·sec·cmHg to calculate a hydrogen sulfide permeability coefficient.

Although a preferred embodiment of the packaging material of the present embodiment has been described in detail, the present disclosure is not limited to the above specific embodiment.

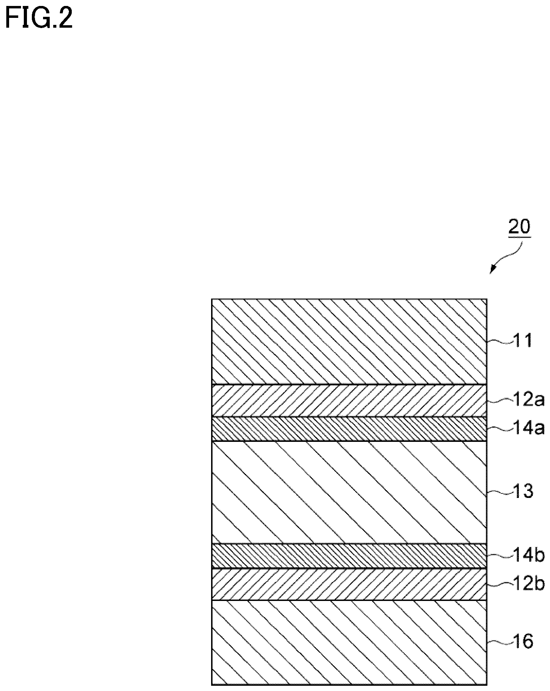

For example, Fig. 1 illustrates an example in which the thermal adhesive resin layer 15 is used as the bonding layer, but a second adhesive layer 12b may be used as the bonding layer as in a packaging material 20 shown in Fig. 2.

<Second Adhesive Layer>

The second adhesive layer 12b will be described below.

The second adhesive layer 12b bonds the barrier layer 13 to the sealant layer 16. A general purpose adhesive for bonding the barrier layer 13 to the sealant layer 16 can be used as the second adhesive layer 12b.

When the second adhesive layer 12b is used as the bonding layer, the hydrogen sulfide permeability coefficient of the sealant layer 16 is $1.1\times10^{-9}$ cc·mm/cm$^2$·sec·cmHg or greater and less than $1.0\times10^{-8}$ cc·mm/cm$^2$·sec·cmHg. The hydrogen sulfide permeability coefficient of the sealant layer 16 is a value measured in the same manner as the method of measuring the hydrogen sulfide permeability coefficient of the laminate 17 described above.

When the hydrogen sulfide permeability coefficient of the sealant layer 16 is $1.1\times10^{-9}$ cc·mm/cm$^2$·sec·cmHg or greater, the sealant layer 16 is neither too hard nor too soft, and even when stress is applied to the sealant layer 16 due to the stretching of the packaging material 20, the stress is relieved in the sealant layer 16, thereby suppressing occurrence of cracking in the sealant layer 16. As a result, even when the packaging material 20 is stretched, deterioration in insulating properties of the sealant layer 16 is suppressed, and thus deterioration in insulating properties of the packaging material 20 is suppressed.

When the hydrogen sulfide permeability coefficient of the sealant layer 16 is $1.1\times10^{-8}$ cc·mm/cm$^2$·sec·cmHg or less, the sealant layer 16 is neither too hard nor too soft, and even when stress is applied to the sealant layer 16 due to the stretching of the packaging material 20, the stress is relieved in the sealant layer 16, thereby suppressing occurrence of cracking in the sealant layer 16. As a result, even when the packaging material 20 is stretched, deterioration in insulating properties of the packaging material 20 is suppressed.

The hydrogen sulfide permeability coefficient of the sealant layer 16 is preferably $2.5\times10^{-9}$

cc·mm/cm$^2$·sec·cmHg or greater, and more preferably $3.5\times10^{-9}$ cc·mm/cm$^2$·sec·cmHg or greater.

Further, the hydrogen sulfide permeability coefficient of the sealant layer 16 is preferably $8.5\times10^{-9}$ cc·mm/cm$^2$·sec·cmHg or less, more preferably $7.5\times10^{-9}$ cc·mm/cm$^2$·sec·cmHg or less, and even more preferably $6.5\times10^{-9}$ cc·mm/cm$^2$·sec·cmHg or less.

When the second adhesive layer 12b is used as the bonding layer, the thickness of the sealant layer 16 may be 15 μm to 300 μm, and from the viewpoint of sealing properties and water vapor barrier properties of the packaging material 20, it is preferably 25 μm to 150 μm, and more preferably 40 μm to 100 μm.

When the anticorrosion treatment layer 14b is provided on the barrier layer 13 and the second anticorrosion treatment layer 14b includes a layer containing at least one polymer selected from the group consisting of the cationic polymers and the anionic polymers, the second adhesive layer 12b preferably contains a compound (hereinafter, also referred to as a "reactive compound") having reactivity with the above-mentioned polymer contained in the second anticorrosion treatment layer 14b.

For example, if the second anticorrosion treatment layer 14b contains a cationic polymer, the second adhesive layer 12b preferably contains a compound having reactivity with the cationic polymer.

If the second anticorrosion treatment layer 14b contains an anionic polymer, the second adhesive layer 12b preferably contains a compound having reactivity with the anionic polymer.

Further, if the second anticorrosion treatment layer 14b contains both a cationic polymer and an anionic polymer, the second adhesive layer 12b preferably contains a compound having reactivity with the cationic polymer and a compound having reactivity with the anionic polymer. However, the second adhesive layer 12b may not necessarily contain the above two types of compounds, but may contain a compound having reactivity with both the cationic polymer and the anionic polymer. The term "having reactivity" as described herein means forming a covalent bond with a cationic polymer or an anionic polymer. The second adhesive layer 12b may further contain an acid-modified polyolefin resin.

The compound having reactivity with the cationic polymer may be at least one compound selected from the group consisting of a polyfunctional isocyanate compound, a glycidyl compound, a compound having a carboxy group, and a compound having an oxazoline group.

Examples of the polyfunctional isocyanate compound, the glycidyl compound, the compound having a carboxy group, and the compound having an oxazoline group include a polyfunctional isocyanate compound, a glycidyl compound, a compound having a carboxy group, a compound having an oxazoline group, and the like, which serve as a crosslinking agent for converting the cationic polymer into a crosslinked structure. Of these compounds, a polyfunctional isocyanate compound is preferred since it has high reactivity with the cationic polymer and can easily form a crosslinked structure.

The compound having reactivity with the anionic polymer may be at least one compound selected from the group consisting of a glycidyl compound and a compound having an oxazoline group.

Examples of the glycidyl compound or the compound having an oxazoline group include a glycidyl compound and a compound having an oxazoline group, and the like, which serve as a crosslinking agent for converting the cationic polymer into a crosslinked structure. Of these compounds, a glycidyl compound is preferred since it has high reactivity with the anionic polymer.

When the second adhesive layer 12b contains an acid-modified polyolefin resin, the reactive compound is preferred to also have reactivity with the acidic group in the acid-modified polyolefin resin (i.e., form a covalent bond with the acidic group).

This further enhances adhesion between the second adhesive layer 12b and the second anticorrosion treatment layer 14b. In addition, the acid-modified polyolefin resin is permitted to have a crosslinked structure to further improve solvent resistance of the packaging material 20.

The content of the reactive compound is preferably 1 to 10 equivalents of the acidic group in the acid-modified polyolefin resin.

When the content of the reactive compound is 1 equivalent or more, the reactive compound sufficiently reacts with the acidic group in the acid-modified polyolefin resin. On the other hand, when the content of the reactive compound exceeds 10 equivalents, the crosslinking reaction with the acid-modified polyolefin resin is sufficiently saturated, and there is a concern that unreacted substances may remain in the second adhesive layer 12b and various performances may deteriorate. Therefore, the content of the reactive compound may preferably be 5 to 20 parts by mass (solid content ratio) relative to 100 parts by mass of the acid-modified polyolefin resin, for example.

The acid-modified polyolefin resin is obtained by introducing an acidic group into a polyolefin resin. Examples of the acidic group include a carboxy group, a sulfonic acid group, and an acid anhydride group. A maleic anhydride group and a (meth)acrylic acid group are particularly preferred. The acid-modified polyolefin resin may be, for example, a modified polyolefin resin similar to the modified polyolefin resin used for the sealant layer 16.

Various additives such as flame retardants, slip agents, anti-blocking agents, antioxidants, photostabilizers and tackifiers may be added to the second adhesive layer 12b.

From the perspective of suppressing deterioration in heat-sealing strength of the packaging material 10 associated with a corrosive gas such as hydrogen sulfide or an electrolyte and the perspective of further suppressing

deterioration in insulating properties of the packaging material 10, the second adhesive layer 12b may contain, for example, an acid-modified polyolefin and at least one curing agent selected from the group consisting of a polyfunctional isocyanate compound, a glycidyl compound, a compound having a carboxy group, a compound having an oxazoline group and a carbodiimide compound.

Examples of the carbodiimide compound include N,N'-di-o-tolylcarbodiimide, N,N'-diphenylcarbodiimide, N,N'-di-2,6-dimethylphenylcarbodiimide, N,N'-bis(2,6-diisopropylphenyl) carbodiimide, N,N'-dioctyldecylcarbodiimide, N-tolyl-N'-cyclohexylcarbodiimide, N,N'-di-2,2-di-t-butylphenylcarbodiimide, N-triyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-di-cyclohexylcarbodiimide and N,N'-di-p-tolylcarbodiimide.

Examples of the adhesive used for forming the second adhesive layer 12b include a polyurethane-based adhesive obtained by adding polyester polyol containing hydrogenated dimer fatty acid and diol to polyisocyanate. Examples of the adhesive include a polyurethane resin prepared by reacting a main resin such as a polyester polyol, polyether polyol, acrylic polyol or carbonate polyol with a bifunctional or higher functional isocyanate compound, and an epoxy resin prepared by reacting a main resin having an epoxy group with an amine compound. These are preferred from the viewpoint of heat resistance of the packaging material 10.

The thickness of the second adhesive layer 12b is not specifically limited, but from the perspective of obtaining a desired adhesive strength, processability and the like of the second adhesive layer 12b, the thickness is preferably 1 μm to 10 μm, and more preferably 2 μm to 7 μm.

[Method of Producing Packaging Material]

Next, an example of a method of producing the packaging material 10 shown in Fig. 1 will be described. The method of producing the packaging material 10 should not be limited to the following method.

The method of producing the packaging material 10 of the present embodiment includes a step of providing the anticorrosion treatment layers 14a and 14b on respective sides of the barrier layer 13, a step of bonding the substrate layer 11 to the barrier layer 13 using the first adhesive layer 12a, a step of preparing a laminate by further laminating the thermal adhesive resin layer 15 and the sealant layer 16 on the surface of the barrier layer 13 on the anticorrosion treatment layer 14b side, and, if necessary, a step of aging the resulting laminate.

(Step of Laminating Anticorrosion Treatment Layer on Barrier Layer)

In this step, the anticorrosion treatment layers 14a and 14b are formed on the barrier layer 13. As described above, the method may include subjecting the barrier layer 13 to degreasing treatment, hydrothermal modification treatment, anodic oxidation treatment or chemical conversion treatment, applying a coating agent having an anticorrosion performance to the barrier layer 13, or the like.

If the anticorrosion treatment layers 14a and 14b are multilayers, for example, a coating liquid (coating agent) that serves as a lower layer-side (barrier layer 13-side) anticorrosion treatment layer may be applied to the barrier layer 13, followed by baking to form a first layer, and then, a coating liquid (coating agent) that serves as an upper layer-side anticorrosion treatment layer may be applied to the first layer, followed by baking to form a second layer.

The degreasing treatment may be performed by spraying or immersion. The hydrothermal conversion treatment and the anodic oxidation treatment may be performed by immersion. The chemical conversion treatment may be performed by a method appropriately selected from immersion, spraying and coating depending on the type of chemical conversion treatment.

The coating agent having an anticorrosion performance can be applied by various methods such as gravure coating, reverse coating, roll coating and bar coating.

As described above, the various treatments for the barrier layer 13 may be applied to either side or both sides of the barrier layer 13 (e.g., metal foil), but in the case of a single-side treatment, the treatment is preferably applied to the surface on which the sealant layer 16 is to be laminated. If desired, the above-mentioned treatment may be applied to the surface of the substrate layer 11.

The amounts of the coating agents for forming the first and second layers are preferably 0.005 g/m$^2$ to 0.200 g/m$^2$, and more preferably 0.010 g/m$^2$ to 0.100 g/m$^2$.

If dry curing is necessary, dry curing can be performed so that the base material temperature is in the range of 60°C to 300°C depending on the drying conditions of the anticorrosion treatment layers 14a and 14b used. The base material temperature refers to the temperature of the barrier layer 13 (e.g., metal foil).

(Step of Bonding Substrate Layer to Barrier Layer)

In this step, the barrier layer 13 provided with the anticorrosion treatment layers 14a and 14b on respective sides

is bonded to the substrate layer 11 via the first adhesive layer 12a. The substrate layer 11 is bonded to the side of the barrier layer 13 that faces the anticorrosion treatment layer 14a.

The bonding method may be dry lamination, non-solvent lamination or wet lamination, and these layers (the barrier layer 13 and the substrate layer 11) may be bonded together using the material constituting the first adhesive layer 12a described above.

The dry coating weight of the first adhesive layer 12a is preferably in the range of 1 g/$m^2$ to 10 g/$m^2$, and more preferably 2 g/$m^2$ to 7 g/$m^2$.

(Step of Laminating Thermal Adhesive Resin Layer and Sealant Layer)

In the step of laminating the thermal adhesive resin layer 15 and the sealant layer 16, the thermal adhesive resin layer 15 and the sealant layer 16 are formed on the side of the barrier layer 13 that faces the anticorrosion treatment layer 14b.

The lamination method includes sandwich-laminating the thermal adhesive resin layer 15 with the anticorrosion treatment layer 14b and the sealant layer 16 using an extrusion laminator.

Further, tandem lamination or co-extrusion by which the thermal adhesive resin layer 15 and the sealant layer 16 are extruded can also be used.

The thermal adhesive resin layer 15 is formed using a thermal adhesive resin layer-forming resin composition containing the components of the thermal adhesive resin layer 15 described above.

The sealant layer 16 is formed using a sealant layer-forming resin composition containing the components of the sealant layer 16 described above.

The laminate 17 of the thermal adhesive resin layer 15 and the sealant layer 16 is formed so that the hydrogen sulfide permeability coefficient is $1.1 \times 10^{-9}$ to $1.0 \times 10^{-8}$ [cc·mm/cm$^2$·sec·cmHg]. In order to achieve this, for example, the resin used for the polypropylene-based resin (A) and the polyethylene-based resin (B) contained in the sealant layer 16 and the resin used for the thermal adhesive resin layer 15 may be appropriately selected considering the degree of crystallinity and the melting point, and the resin composition and the like may be appropriately adjusted so that the hardness and softness of the thermal adhesive resin layer 15 and the sealant layer 16 are balanced.

According to the step of laminating the thermal adhesive resin layer 15 and the sealant layer 16, a laminate is obtained, as shown in Fig. 1, in which the substrate layer 11, the first adhesive layer 12a, the first anticorrosion treatment layer 14a, the barrier layer 13, the second anticorrosion treatment layer 14b, the thermal adhesive resin layer 15 and the sealant layer 16 are laminated in this order.

When laminating the thermal adhesive resin layer 15, materials obtained by dry-blending the components of the thermal adhesive resin layer-forming resin composition may be directly laminated using an extrusion laminator. Alternatively, when laminating the thermal adhesive resin layer 15, granules obtained in advance by melt-blending materials using a melt kneading device, such as a single-screw extruder, twin-screw extruder or Brabender mixer, may be laminated using an extrusion laminator.

When laminating the sealant layer 16, materials obtained by dry-blending the components of the sealant layer-forming resin composition may be directly laminated using an extrusion laminator. Alternatively, when laminating the thermal adhesive resin layer 15 and the sealant layer 16, granules obtained in advance by melt-blending materials using a melt kneading device, such as a single-screw extruder, twin-screw extruder or Brabender mixer, may be used to laminate the thermal adhesive resin layer 15 and the sealant layer 16 by tandem lamination or co-extrusion using an extrusion laminator.

Moreover, when laminating the thermal adhesive resin layer 15 and sealant layer 16, the sealant layer 16 may be formed as a cast film in advance using a sealant layer-forming resin composition, and the sealant layer 16 may be laminated by sandwich-lamination together with the thermal adhesive resin layer 15.

The formation rate (processing rate) of the thermal adhesive resin layer 15 and the sealant layer 16 may be set to 80 m/min or more from the viewpoint of productivity of the packaging material 10.

(Step of Aging)

In the aging step, the laminate is aged (cured). Aging of the laminate can promote interlayer adhesion of the substrate layer 11, the first adhesive layer 12a, the first anticorrosion treatment layer 14a and the barrier layer 13, and interlayer adhesion of the barrier layer 13, the second anticorrosion treatment layer 14b, the thermal adhesive resin layer 15 and the sealant layer 16.

The aging temperature may be 80°C or higher, preferably 100°C or higher, and more preferably 120°C or higher, and may be 140°C or lower, preferably 150°C or lower, and more preferably 160°C or lower.

The aging time may be 1 hour or more, preferably 2 hours or more, and more preferably 3 hours or more, and may be 24 hours or less, preferably 48 hours or less, and more preferably 72 hours or less.

In this manner, the packaging material 10 shown in Fig. 1 can be produced.

Next, an example of a method of producing the power storage device packaging material 20 shown in Fig. 2 will be described. The method of producing the packaging material 20 should not be limited to the following method.

The method of producing the packaging material 20 of the present embodiment includes a step of providing the anticorrosion treatment layers 14a and 14b on respective sides of the barrier layer 13, a step of bonding the substrate layer 11 to the barrier layer 13 using the first adhesive layer 12a, a step of preparing a laminate by bonding the sealant layer 16 to the side of the barrier layer 13 that faces the anticorrosion treatment layer 14b via the second adhesive layer 12b, and, if necessary, a step of aging the resulting laminate.

The steps up to the step of bonding the substrate layer 11 to the barrier layer 13 using the first adhesive layer 12a can be performed in the same manner as in the method of producing the packaging material 10. The step of aging the resulting laminate can be performed in the same manner as in the method of producing the packaging material 10.

(Step of Laminating Second Adhesive Layer and Sealant Layer)

In the step of laminating the second adhesive layer 12b and the sealant layer 16, the sealant layer 16 is bonded to the side of the barrier layer 13 that faces the anticorrosion treatment layer 14b via the second adhesive layer 12b to form a laminate.

The bonding method may be wet processing, dry lamination, or the like.

If wet processing is used, a solution or a dispersion of the adhesive constituting the second adhesive layer 12b is applied to the anticorrosion treatment layer 14b, the solvent is evaporated at a predetermined temperature to form a film by drying, and if necessary, baking is performed after the dry film formation.

Then, the sealant layer 16 is laminated.

The method of coating includes various coating methods. A preferred dry coating weight of the second adhesive layer 12b is the same as that of the first adhesive layer 12a.

In this case, the sealant layer 16 can be produced, for example, using a sealant layer-forming resin composition containing the polypropylene-based resin (A) and the polyethylene-based resin (B) described above by using a melt extrusion molding machine. The processing rate of the melt extrusion molding machine may be 80 m/min or more, from the viewpoint of productivity of the packaging material 10.

The sealant layer 16 is formed so that the hydrogen sulfide permeability coefficient is $1.1\times10^{-9}$ to $1.0\times10^{-8}$ [$cc\cdot mm/cm^2\cdot sec\cdot cmHg$]. In order to achieve this, for example, the resin used for the polypropylene-based resin (A) and the polyethylene-based resin (B) contained in the sealant layer 16 may be appropriately selected considering the degree of crystallinity and the melting point, and the resin content in the polypropylene-based resin (A) and the polyethylene-based resin (B) may be appropriately adjusted so that the hardness and softness of the sealant layer 16 are balanced.

Thus, the packaging material 20 shown in Fig. 2 can be produced.

[Power Storage Device]

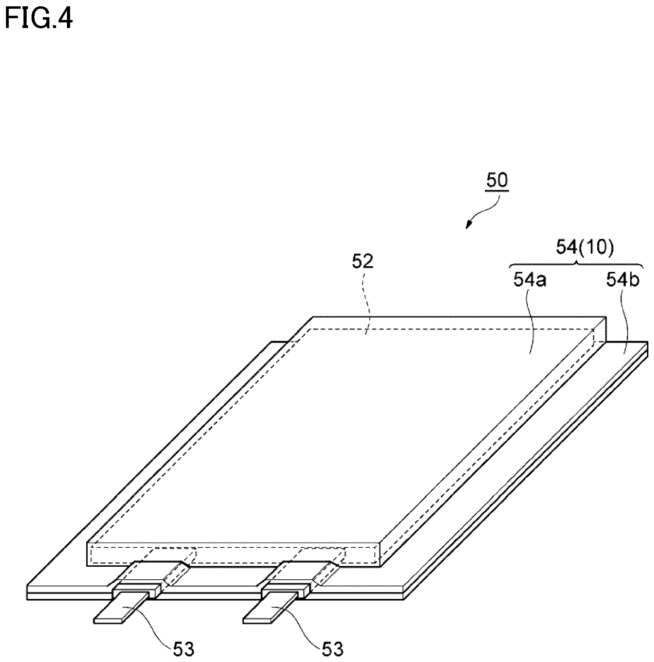

Next, a power storage device according to an embodiment of the present disclosure will be described with reference to Fig 4. Fig. 4 is a perspective view of a power storage device according to an embodiment of the present disclosure.

As shown in Fig. 4, a power storage device 50 includes a power storage element 52, a packaging bag 54 that houses the power storage element 52. The power storage device 50 may further include two metal terminals (current extraction terminals) 53 that extend from the power storage element 52 and extract electric current externally. The packaging bag 54 sandwiches the metal terminals 53. Further, the packaging bag 54 may hermetically house the power storage element 52.

The packaging bag 54 is formed using the packaging material 10. In the packaging material 10, the substrate layer 11 is the outermost layer, and the sealant layer 16 is the innermost layer. As shown in Fig. 4, the packaging bag 54 may be formed by folding a single packaging material 10 in two or stacking two packaging materials 10 so that the substrate layer 11 faces outside the power storage device 50 and the sealant layer 16 faces inside the power storage device 50, followed by heat sealing of the edge portion of the packaging material 10 or the two packaging materials 10.

The metal terminals 53 are sandwiched and held by the packaging bag 54 that forms the container with the sealant layer 16 on the inside. The metal terminals 53 may be sandwiched and held by the packaging material 10 via a tab sealant.

According to the power storage device 50, even if the packaging material 10 is stretched due to the power storage element 52 expanding and contracting in response to charging and discharging during operation of the power storage device 50, deterioration in insulating properties of the packaging bag 54 formed using the packaging material 10 is suppressed, resulting in longer service life of the power storage device 50.

The power storage element 52 includes a positive electrode, a negative electrode and an electrolyte. The

electrolyte is disposed at least between the positive electrode and the negative electrode.

The electrolyte may be a liquid electrolyte or a solid electrolyte. Examples of the solid electrolyte include an oxide solid electrolyte and a sulfide solid electrolyte.

The metal terminals 53 are part of a current collector extended externally from the packaging material 10, and are composed of a metal foil such as a copper foil or an aluminum foil.

The power storage device 50 may include the packaging material 20 instead of the packaging material 10.

Specific examples of the power storage device 50 include secondary batteries such as solid-state batteries, lithium-ion batteries, nickel hydride batteries and lead batteries, electrochemical capacitors such as electric double layer capacitors, and semi-solid-state batteries.

When the power storage device 50 is a solid-state battery, that is, when the power storage element 52 includes a solid electrolyte, the power storage element 52 is particularly likely to expand and contract, but even when the power storage element 52 expands and contracts, deterioration in insulating properties of the power storage device packaging material 10 due to stretching is suppressed, and thus deterioration in insulating properties of the packaging bag 54 is suppressed, resulting in longer service life of the power storage device 50.

## Examples

The present disclosure will be described below in more detail by way of examples. However, the present disclosure should not be limited to the following examples.

### [Materials Used]

Materials used as the substrate layer, the first adhesive layer-forming adhesive, the second adhesive layer-forming adhesive, the first anticorrosion treatment layer-forming material, the second anticorrosion treatment layer-forming material, the barrier layer, the thermal adhesive resin layer-forming composition, and the sealant layer-forming composition are as follows.

<Substrate Layer>

PET: Polyethylene terephthalate film (25 μm thickness) having one surface subjected to a corona treatment

<First Adhesive Layer-Forming Adhesive>

An adhesive (first adhesive) obtained by blending polyester polyol (manufactured by Showa Denko Materials Co., Ltd., product name: TESLAC 2505-63, hydroxyl group value: 7 to 11 mgKOH/g) and an isocyanurate of isophorone diisocyanate (manufactured by Mitsui Chemicals, Inc., product name: TAKENATE 600) at an NCO/OH ratio of 20.0, and diluting it with ethyl acetate to a solid content of 26 mass%

<Second Adhesive Layer-Forming Adhesive>

An adhesive (second adhesive) obtained by blending 10 parts by mass (solid content ratio) of a polyisocyanate compound having an isocyanurate structure per 100 parts by mass of an acid-modified polyolefin resin dissolved in toluene

<First Anticorrosion Treatment Layer-Forming Material and Second Anticorrosion Treatment Layer-Forming Material>

The first anticorrosion treatment layer-forming material (substrate layer-side) and the second anticorrosion treatment layer-forming material (sealant layer-side) were (CL-1) and (CL-2) below.

(CL-1): Sodium polyphosphate stabilized cerium oxide sol adjusted to a solid concentration of 10 mass% by using distilled water as a solvent

The sodium polyphosphate stabilized cerium oxide sol was obtained by blending 10 parts by mass of Na salt of phosphoric acid per 100 parts by mass of cerium oxide.

(CL-2): Composition adjusted to a solid concentration of 5 mass% by using distilled water as a solvent

In the above composition, the ratio "polyallylamine (manufactured by Nitto Boseki Co., Ltd.)" : "polyglycerol polyglycidyl ether (manufactured by Nagase ChemteX Corporation)" was 90:10 (mass ratio).

<Barrier Layer (40 μm Thickness)>

Annealed and degreased soft aluminum foil (8079 Material manufactured by Toyo Aluminum K.K.)

<Thermal Adhesive Resin Layer-Forming Composition>

Thermal adhesive resin layer-forming composition obtained by mixing maleic anhydride-modified homopolypropylene and an ethylene·1-butene copolymer as a polyethylene-based resin in a ratio of 80 mass% and 20 mass%, respectively.

<Sealant Layer-Forming Resin Composition>

Sealant layer-forming resin composition obtained by dry-blending the polypropylene-based resin (A) and the polyethylene-based resin (B) shown in Tables 2 and 3 at respective contents shown in Tables 2 and 3.

The materials, melting points and Mw/Mn of the polypropylene-based resin (A) and the polyethylene-based resin (B) shown in Tables 2 and 3 are as shown in Table 1 below. In Tables 1 to 3, "PP" refers to "polypropylene," "PE" refers to "polyethylene," and LLDPE refers to "linear low density polyethylene."

[Table 1]

| | Type | Material | Melting point [°C] | Mw/Mn |
|---|---|---|---|---|
| PP-based resin (A) | A1 | Homo PP | 165 | - |
| | A2 | Block PP | 164 | - |
| PE-based resin (B) | B1 | PE-butene copolymer | 83 | 1.1 |
| | B2 | PE-butene copolymer | 81 | 1.7 |
| | B3 | PE-butene copolymer | 82 | 3.0 |
| | B4 | PE-butene copolymer | 57 | 3.0 |
| | B5 | PE-butene copolymer | 80 | 4.2 |
| | B6 | PE-butene copolymer | 81 | 5.1 |
| | B7 | PE-octene copolymer | 89 | 3.1 |
| | B8 | LLDPE | 115 | 3.0 |

The melting peak temperature of the polypropylene-based resin (A) was measured in accordance with JIS K 7121-1987 using a differential scanning calorimeter. Further, Mw and Mn of the polyethylene-based resin (B) were determined in accordance with JIS K 7252-1 and 4:2016 using gel permeation chromatography at a measurement temperature of 145°C and expressed relative to a polystyrene standard.

[Preparation of Packaging Material]

(Example 1)

First, first and second anticorrosion treatment layers were provided on the respective surfaces of a barrier layer by the following procedure.

That is, (CL-1) was applied to both sides of the barrier layer by micro gravure coating at a dry coating weight of 70 mg/$m^2$, followed by baking at 200°C in a drying unit. Then, (CL-2) was applied to the layers formed with (CL-1) on both sides of the barrier layer by micro gravure coating at a dry coating weight of 20 mg/$m^2$. Thus, the first and second anticorrosion treatment layers were formed on the respective surfaces of the barrier layer.

Next, a substrate layer was bonded to the first anticorrosion treatment layer by dry lamination using a first adhesive layer-forming adhesive.

That is, the first adhesive layer-forming adhesive was applied to the surface of the barrier layer that faces the first anticorrosion treatment layer at a cured thickness of 4 μm, followed by drying at 80°C for 1 minute, and the surface was then laminated on the substrate layer, followed by aging at 80°C for 120 hours. Thus, a first laminate (substrate layer / first adhesive layer / first anticorrosion treatment layer / barrier layer / second anticorrosion treatment layer) was obtained.

Finally, a thermal adhesive resin layer and a sealant layer were laminated in this order on the second antic-

orrosion treatment layer.

That is, the first laminate was set in an unwinding unit of an extrusion laminator. Then, a thermal adhesive resin layer-forming composition and a sealant layer-forming resin composition were coextruded from a T-die onto the second anticorrosion treatment layer under processing conditions of 270°C and 80 m/min to laminate the thermal adhesive resin layer and the sealant layer in this order. The thicknesses of the thermal adhesive resin layer and the sealant layer were 20 μm and 60 μm, respectively, and the hydrogen sulfide permeability coefficient of the laminate formed of the thermal adhesive resin layer and the sealant layer was set to the value shown in Table 2.

Thus, a power storage device packaging material according to Example 1 (substrate layer / first adhesive layer / first anticorrosion treatment layer / barrier layer / second anticorrosion treatment layer / thermal adhesive resin layer / sealant layer) was obtained.

(Examples 2 to 9 and Comparative Examples 1 and 2)

Power storage device packaging materials according to Examples 2 to 9 and Comparative examples 1 and 2 were obtained in the same manner as in Example 1, except that a sealant layer-forming resin composition obtained by dry-blending the polypropylene-based resin (A) and the polyethylene-based resin (B) shown in Table 2 at respective contents shown in Table 2 was used as the sealant layer-forming resin composition, and the hydrogen sulfide permeability coefficient of the laminate formed of the thermal adhesive resin layer and the sealant layer was set to the value shown in Table 2.

(Examples 10, 11 and Comparative Examples 3)

A first laminate (substrate layer / first adhesive layer / first anticorrosion treatment layer / barrier layer / second anticorrosion treatment layer) was obtained in the same manner as in Example 1.

Next, an 80 μm-thick sealant layer was bonded to the second anticorrosion treatment layer of the first laminate by dry lamination using the second adhesive layer-forming adhesive, and then aging was performed at 40°C for 96 hours. Thus, power storage device packaging materials according to Examples 10, 11 and Comparative example 3 were obtained.

The sealant layer was prepared in advance by a T-die method using a sealant layer-forming resin composition obtained by dry-blending the polypropylene-based resin (A) and the polyethylene-based resin (B) shown in Table 3 at respective contents shown in Table 2. The sealant layer was bonded to the first laminate by applying a second adhesive layer-forming adhesive to the second anticorrosion treatment layer at a thickness after heating of 3 μm, heating it at 100°C for 1 minute to form a second adhesive layer, and then laminating the second adhesive layer and the sealant layer. The hydrogen sulfide permeability coefficient of the sealant layer was set to the value shown in Table 3.

[Measurement of Hydrogen Sulfide Permeability Coefficient]

(1) Hydrogen Sulfide Permeability Coefficient of Laminate of Thermal Adhesive Resin Layer and Sealant Layer

A thermal adhesive resin layer-forming composition and a sealant layer-forming resin composition were coextruded from a T-die under processing conditions of 270°C and 80 m/min to obtain a laminate of a thermal adhesive resin layer and a sealant layer. The thicknesses of the thermal adhesive resin layer and the sealant layer were 20 μm and 60 μm, respectively. The hydrogen sulfide permeability coefficient of the laminate was measured according to the above-mentioned method for measuring the hydrogen sulfide permeability coefficient of the laminate.

(2) Hydrogen Sulfide Permeability Coefficient of Laminate of Sealant Layer

A sealant layer-forming resin composition was extruded from a T-die under processing conditions of 270°C and 80 m/min to obtain a sealant layer. The thickness of the sealant layer was 80 μm. The hydrogen sulfide permeability coefficient of the sealant layer was measured in the same manner as in the method for measuring the hydrogen sulfide permeability coefficient of the laminate.

[Evaluation of Insulating Properties]

The insulating properties of the packaging materials of the examples and comparative examples were evaluated.

(1) Sample Preparation

First, a rectangular sheet measuring 50 mm in length and 30 mm in width was cut out from the respective packaging materials obtained in the examples and comparative examples.
Next, using a tensile tester (manufactured by Shimadzu Corporation), the sheet was stretched in the longitudinal direction at a speed of 5 mm/min until the amount of displacement reached 10%. The sheet obtained by stretching was used as a measurement sample.

(2) Insulation Evaluation Test

In the measurement sample obtained as described above, only a portion of the substrate layer and the first adhesive layer was sanded with sandpaper to expose the aluminum foil serving as the barrier layer.
Next, the measurement sample was placed on a flat surface with the substrate layer facing the flat surface and the sealant layer facing away from the flat surface. Then, tap water was dropped onto the center of the surface of the sealant layer of the measurement sample, and a 95g weight was placed on the center of the droplet.
Next, the measurement sample was clamped with an alligator clip so that it was in contact with the barrier layer but not in contact with the weight and the droplet on the laminate. Then, the weight was connected to the negative electrode of a power supply and the alligator clip was connected to the positive electrode of the power supply, and voltages of 4kV, 5kV and 6kV were applied, and the current value at that time was measured. Then, the insulating properties were evaluated based on the applied voltage, the current value measured at that time, and the following evaluation criteria. Thus, the insulating properties after stretching were evaluated.
Further, a measurement sample was prepared in the same manner as described above except that stretching by a tensile tester was not performed, and the insulating properties (insulating properties before stretching) of the measurement sample were evaluated. Table 4 shows the results.

<Evaluation Criteria for Insulating Properties>

A: Current value was less than 5 mA when a 6 kV DC voltage was applied

B: Current value was 5 mA or greater when a 6 kV DC voltage was applied, and current value was less than 5 mA when a 5 kV DC voltage was applied

C: Current value was 5 mA or greater when a 5 kV DC voltage was applied, and current value was less than 5 mA when a 4 kV DC voltage was applied

D: Current value was 5 mA or greater when a 4 kV DC voltage was applied

[Table 2]

| | Bonding layer | Sealant layer | | | | Sealant layer and adhesive resin |
|---|---|---|---|---|---|---|
| | | PP-based resin (A) | | PE-based resin (B) | | Hydrogen sulfide permeability coefficient [cc·mm/cm$^2$·sec·cmHg] |
| | | Type | Content (mass%) | Type | Content (mass%) | |
| Ex. 1 | Thermal adhesive resin layer | A1 | 85% | B1 | 15% | $2.2\times10^{-9}$ |
| Ex. 2 | Thermal adhesive resin layer | A1 | 85% | B2 | 15% | $3.4\times10^{-9}$ |
| Ex. 3 | Thermal adhesive resin layer | A1 | 85% | B3 | 15% | $5.6\times10^{-9}$ |
| Ex. 4 | Thermal adhesive resin layer | A1 | 85% | B4 | 15% | $6.9\times10^{-9}$ |

(continued)

| | Bonding layer | Sealant layer | | | | Sealant layer and adhesive resin |
|---|---|---|---|---|---|---|
| | | PP-based resin (A) | | PE-based resin (B) | | Hydrogen sulfide permeability coefficient [cc·mm/cm$^2$·sec·cmHg] |
| | | Type | Content (mass%) | Type | Content (mass%) | |
| Ex. 5 | Thermal adhesive resin layer | A1 | 85% | B5 | 15% | $7.2\times10^{-9}$ |
| Ex. 6 | Thermal adhesive resin layer | A1 | 85% | B6 | 15% | $8.5\times10^{-9}$ |
| Ex. 7 | Thermal adhesive resin layer | A1 | 85% | B7 | 15% | $5.1\times10^{-9}$ |
| Ex. 8 | Thermal adhesive resin layer | A1 | 85% | B8 | 15% | $9.7\times10^{-9}$ |
| Ex. 9 | Thermal adhesive resin layer | A2 | 85% | B3 | 15% | $9.8\times10^{-9}$ |
| Comp. ex. 1 | Thermal adhesive resin layer | A1 | 100% | - | - | $1.0\times10^{-9}$ |
| Comp. ex. 2 | Thermal adhesive resin layer | - | - | B3 | 100% | $1.7\times10^{-8}$ |

[Table 3]

| | Bonding layer | Sealant layer | | | | |
|---|---|---|---|---|---|---|
| | | PP-based resin (A) | | PE-based resin (B) | | Hydrogen sulfide permeability coefficient [cc·mm/cm$^2$·sec·cmHg] |
| | | Type | Content (mass%) | Type | Content (mass%) | |
| Ex. 10 | Adhesive layer | A1 | 85% | B3 | 15% | $5.1\times10^{-9}$ |
| Ex. 11 | Adhesive layer | A1 | 85% | B7 | 15% | $5.0\times10^{-9}$ |
| Comp. ex. 3 | Adhesive layer | A1 | 100% | - | - | $9.8\times10^{-10}$ |

[Table 4]

| | Insulating properties | |
|---|---|---|
| | Evaluation | |
| | Before stretching | After stretching |
| Ex. 1 | A | C |
| Ex. 2 | A | B |
| Ex. 3 | A | A |
| Ex. 4 | A | B |
| Ex. 5 | A | B |
| Ex. 6 | A | C |
| Ex. 7 | A | A |
| Ex. 8 | A | C |
| Ex. 9 | A | C |
| Ex. 10 | A | A |

(continued)

| | Insulating properties | |
|---|---|---|
| | Evaluation | |
| | Before stretching | After stretching |
| Ex. 11 | A | A |
| Comp. ex. 1 | A | D |
| Comp. ex. 2 | A | D |
| Comp. ex. 3 | A | D |

From the results shown in Table 4, the evaluation of the insulating properties after stretching was "A" to "C" in Examples 1 to 11 compared to "A" before stretching, whereas it was "D" in Comparative Examples 1 to 3.

The above shows that, according to the power storage device packaging material of the present disclosure, deterioration in insulating properties due to stretching can be suppressed.

The summary of the present disclosure is as follows.

[1] A power storage device packaging material including: a substrate layer; a barrier layer; a bonding layer; and a sealant layer in this order,

the bonding layer being a thermal adhesive resin layer or an adhesive layer, wherein

when the bonding layer is the thermal adhesive resin layer, a laminate of the thermal adhesive resin layer and the sealant layer has a hydrogen sulfide permeability coefficient of $1.1\times10^{-9}$ cc·mm/cm$^{2}$·sec·cmHg or greater and less than $1.0\times10^{-8}$ cc·mm/cm$^{2}$·sec·cmHg, and

when the bonding layer is the adhesive layer, the sealant layer has a hydrogen sulfide permeability coefficient of $1.1\times10^{-9}$ cc·mm/cm$^{2}$·sec·cmHg or greater and less than $1.0\times10^{-8}$ cc·mm/cm$^{2}$·sec·cmHg.

[2] The power storage device packaging material according to [1], wherein

the sealant layer contains a polypropylene-based resin that contains at least one of homo polypropylene and block polypropylene, and a polyethylene-based resin, and

the polyethylene-based resin has at least one melting peak in a range of 60°C or higher and 105°C or less.

[3] The power storage device packaging material according to [1] or [2], wherein
the polyethylene-based resin has a ratio (Mw/Mn) of a weight average molecular weight Mw to a number average molecular weight Mn of 1.2 or greater and 5.0 or less.

[4] The power storage device packaging material according to [1], wherein
the sealant layer contains a polypropylene-based resin that contains at least one of homo polypropylene and block polypropylene, and a content of the polypropylene-based resin in the sealant layer is 50 mass% to 95 mass%.

[5] The power storage device packaging material according to any of [1] to [4], wherein
the bonding layer is the thermal adhesive resin layer, the thermal adhesive resin layer contains a polypropylene-based resin, and a content of the polypropylene-based resin in the thermal adhesive resin layer is 50 mass% to 95 mass%.

[6] The power storage device packaging material according to [1], wherein
the sealant layer contains a polypropylene-based resin that contains homo polypropylene, and a polyethylene-based resin, and the polyethylene-based resin has a ratio (Mw/Mn) of a weight average molecular weight Mw to a number average molecular weight Mn of 1.2 or greater and 5.0 or less.

[7] The power storage device packaging material according to [1] to [6], wherein
when the bonding layer is the thermal adhesive resin layer, a laminate of the thermal adhesive resin layer and the sealant layer has a total thickness of 25 μm to 150 μm, and when the bonding layer is the adhesive layer, the sealant

layer has a thickness of 25 μm to 150 μm.

[8] The power storage device packaging material according to any of [1] to [7], wherein the power storage device is a solid-state battery.

[9] A power storage device including:

a power storage element; and

a packaging bag that houses the power storage element, wherein

the packaging bag is formed using the power storage device packaging material according to any of [1] to [8].

[10] The power storage device according to [9], wherein the power storage device is a solid-state battery.

[Industrial Applicability]

According to the power storage device packaging material of the present disclosure, deterioration in insulating properties due to stretching can be suppressed, and therefore the present disclosure is useful for power storage devices such as solid-state batteries.

[Reference Signs List]

10, 20 ... Power storage device packaging material,
11 ... Substrate layer,
13 ... Barrier layer,
15 ... Thermal adhesive resin layer (bonding layer),
16 ... Sealant layer,
17 ... Laminate, 12b ... Second adhesive layer (bonding layer),
50 ... Power storage device (solid-state battery)
52 ... Power storage element,
54 ... Packaging bag.

## Claims

**1.** A power storage device packaging material comprising:

a substrate layer; a barrier layer; a bonding layer; and a sealant layer in this order,
the bonding layer being a thermal adhesive resin layer or an adhesive layer, wherein
when the bonding layer is the thermal adhesive resin layer, a laminate of the thermal adhesive resin layer and the sealant layer has a hydrogen sulfide permeability coefficient of $1.1 \times 10^{-9}$ cc·mm/cm$^2$·sec·cmHg or greater and less than $1.0 \times 10^{-8}$ cc·mm/cm$^2$·sec·cmHg, and
when the bonding layer is the adhesive layer, the sealant layer has a hydrogen sulfide permeability coefficient of $1.1 \times 10^{-9}$ cc·mm/cm$^2$·sec·cmHg or greater and less than $1.0 \times 10^{-8}$ cc·mm/cm$^2$·sec·cmHg.

**2.** The power storage device packaging material according to claim 1, wherein

the sealant layer contains a polypropylene-based resin that contains at least one of homo polypropylene and block polypropylene, and a polyethylene-based resin, and
the polyethylene-based resin has at least one melting peak in a range of 60°C or higher and 105°C or less.

**3.** The power storage device packaging material according to claim 2, wherein
the polyethylene-based resin has a ratio (Mw/Mn) of a weight average molecular weight Mw to a number average molecular weight Mn of 1.2 or greater and 5.0 or less.

**4.** The power storage device packaging material according to claim 1, wherein

the sealant layer contains a polypropylene-based resin that contains at least one of homo polypropylene and block polypropylene, and
a content of the polypropylene-based resin in the sealant layer is 50 mass% to 95 mass%.

**5.** The power storage device packaging material according to claim 4, wherein

the bonding layer is the thermal adhesive resin layer,
the thermal adhesive resin layer contains a polypropylene-based resin, and
a content of the polypropylene-based resin in the thermal adhesive resin layer is 30 mass% to 100 mass%.

**6.** The power storage device packaging material according to claim 1, wherein

the sealant layer contains a polypropylene-based resin that contains homo polypropylene, and a polyethylene-based resin, and
the polyethylene-based resin has a ratio (Mw/Mn) of a weight average molecular weight Mw to a number average molecular weight Mn of 1.2 or greater and 5.0 or less.

**7.** The power storage device packaging material according to claim 1, wherein

when the bonding layer is the thermal adhesive resin layer, a laminate of the thermal adhesive resin layer and the sealant layer has a total thickness of 25 μm to 150 μm, and
when the bonding layer is the adhesive layer, the sealant layer has a thickness of 25 μm to 150 μm.

**8.** The power storage device packaging material according to any one of claims 1 to 7, wherein
the power storage device is a solid-state battery.

**9.** A power storage device comprising:

a power storage element; and
a packaging bag that accommodates the power storage element, wherein
the packaging bag is formed using the power storage device packaging material according to any one of claims 1 to 7.

**10.** The power storage device according to claim 9, wherein
the power storage device is a solid-state battery.

FIG.1

10
11
12a
14a
13
14b
15
17
16

FIG.2

20
11
12a
14a
13
14b
12b
16

FIG.3

30
32
33
31
35
36
37
38

FIG.4

50
52
54(10)
54a
54b
53
53

## INTERNATIONAL SEARCH REPORT

International application No. **PCT/JP2024/029680**

**A. CLASSIFICATION OF SUBJECT MATTER**

***H01M 50/105***(2021.01)i; ***H01M 50/119***(2021.01)i; ***H01M 50/121***(2021.01)i; ***H01M 50/129***(2021.01)i; ***H01M 50/131***(2021.01)i
FI: H01M50/105; H01M50/119; H01M50/121; H01M50/129; H01M50/131

According to International Patent Classification (IPC) or to both national classification and IPC

**B. FIELDS SEARCHED**

Minimum documentation searched (classification system followed by classification symbols)

H01M50/00 - 50-198; H01M10/05 - 10/0587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/153456 A1 (DAI NIPPON PRINTING CO., LTD.) 30 July 2020 (2020-07-30) paragraphs [0023], [0062], [0121]-[0154], [0171], [0173], table 1, fig. 6 | 1-10 |
| A | WO 2020/153458 A1 (DAI NIPPON PRINTING CO., LTD.) 30 July 2020 (2020-07-30) paragraphs [0019], [0117]-[0151], [0168], [0170], table 1, fig. 7 | 1-10 |
| A | WO 2023/017837 A1 (SHOWA DENKO PACKAGING CO., LTD.) 16 February 2023 (2023-02-16) paragraphs [0029], [0038]-[0043], [0051], table 1, fig. 1-2 | 1-10 |
| P, A | JP 2023-176972 A (TOPPAN HOLDINGS INC.) 13 December 2023 (2023-12-13) paragraphs [0022], [0057]-[0065], [0076]-[0078], [0091]-[0092], fig. 1, 4 | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 October 2024** | **12 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/029680**

| Patent document cited in search report | Publication date (day/month/year) | Patent family member(s) | Publication date (day/month/year) |
|---|---|---|---|
| WO 2020/153456 A1 | 30 July 2020 | US 2022/0069390 A1<br>paragraphs [0031], [0071], [0136]-[0169], [0186]-[0196], [0198], table 1, fig. 6<br>EP 3916875 A1<br>paragraphs [0023], [0062], [0121]-[0154], [0171]-[0174], [0176], table 1, fig. 6<br>CN 113330620 A<br>KR 10-2021-0116441 A | |
| WO 2020/153458 A1 | 30 July 2020 | US 2022/0069344 A1<br>paragraphs [0028], [0133]-[0167], [0184]-[0192], [0194], table 1, fig. 7<br>EP 3916874 A1<br>paragraphs [0019], [0117]-[0151], [0168]-[0171], [0173], table 1, fig. 7<br>CN 113316860 A<br>KR 10-2021-0116442 A | |
| WO 2023/017837 A1 | 16 February 2023 | US 2024/0250350 A1<br>paragraphs [0032], [0041]-[0046], [0054], table 1, fig. 1-2<br>CN 117813718 A<br>KR 10-2024-0029092 A | |
| JP 2023-176972 A | 13 December 2023 | WO 2023/234117 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020153456 A
- WO 2020153458 A